# EUROPEAN PATENT APPLICATION

(11) **EP 1 376 350 A1**
(43) Date of publication of application: **02.01.2004**
(21) Application number: 02354073.5
(22) Date of filing: 29.04.2002
(51) Int. Cl.: G06F 9/45, G06F 9/44

(54) **Improvements in structuring program code**

(71) Applicant: Hewlett-Packard Company, Palo Alto, CA 94304 (US)
(72) Inventor: Reynaud, Sylvain, 69100 Villeurbanne (FR)
(74) Representative: Lloyd, Richard Graham

(57) **Abstract**

A process and associated programs are described for structuring program code, comprising the steps of: procuring a syntax tree representative of an input program code; replacing at least some jump statements in the input program code by one-shot loops by introducing loop structure nodes directly in the syntax tree to depend from a common ancestor of the jump statement and the target thereof, the basic blocks in the same branches of the syntax tree as the jump statement and its target and the branches inbetween being moved to depend from the introduced loop structure node, the jump statement being replaced by a break or continue statement so that the syntax tree corresponds to an output program code having functionality substantially equivalent to that of the input program code.

## Description

This invention relates to a process for, for instance, removing conditional and unconditional jump statements from computer program code by replacing them with one-shot loops that include CONTINUE or BREAK statements, or their equivalents.

Background information regarding the process of replacing goto statements with one-shot loops can be found in "Eliminating GOTO's while Preserving Program Structure", L. RAMSHAW, Jul, 1985 [RAMSHAW]. The method described therein consists in adding labeled repeat-forever loops, to a sequence of code instructions. Then, multi-level break statements can be used to translate many structures that cannot be translated with while or if-then-else statements.

Flow graph augmentation generally in accordance with this prior art technique is made by adding edges, and stretching the added edges until the structure obtained does not cross any other structure.

This invention provides a process for structuring program code, comprising the steps of: procuring a syntax tree representative of an input program code; replacing at least some jump statements in the input program code by one-shot loops by introducing loop structure nodes directly in the syntax tree to depend from a common ancestor of the jump statement and the target thereof, the basic blocks in the same branches of the syntax tree as the jump statement and its target and the branches inbetween being moved to depend from the introduced loop structure node, the jump statement being replaced by a break or continue statement.

The process employed in the present implementation eliminates the time consuming "edge stretching" operations described in RAMSHAW by directly adding nodes in the syntax tree and moving other nodes under the newly added nodes.

The appropriate size for the one-shot loop is obtained directly via the position of the added structure node in the tree, instead of by carrying out repeated stretching operations performed on the instruction sequence. Moreover, the tree augmentation process does not need to check if the added one-shot loop crosses another structure, while the augmentation process described in RAMSHAW needs to check this for each step of the edge-stretching phase.

Preferably the process comprises scanning the syntax tree in a forward direction to replace forward jumps and then scanning the syntax tree in a backward direction to replace backward jumps.

Redundant one-shot loops can be removed from the syntax tree. In this way, the minimum number of added one-shot loops is used in order to decrease number of nested structures.

An embodiment of the invention will now be described by way of example only, with reference to the accompanying drawings, wherein:
Figure 1 shows an exemplary syntax tree that includes JUMP and conditional JUMP statements;
Figure 2 is a general flow diagram of a tree augmenting process;
Figure 3 is a flow diagram illustrating a forward edge augmentation process;

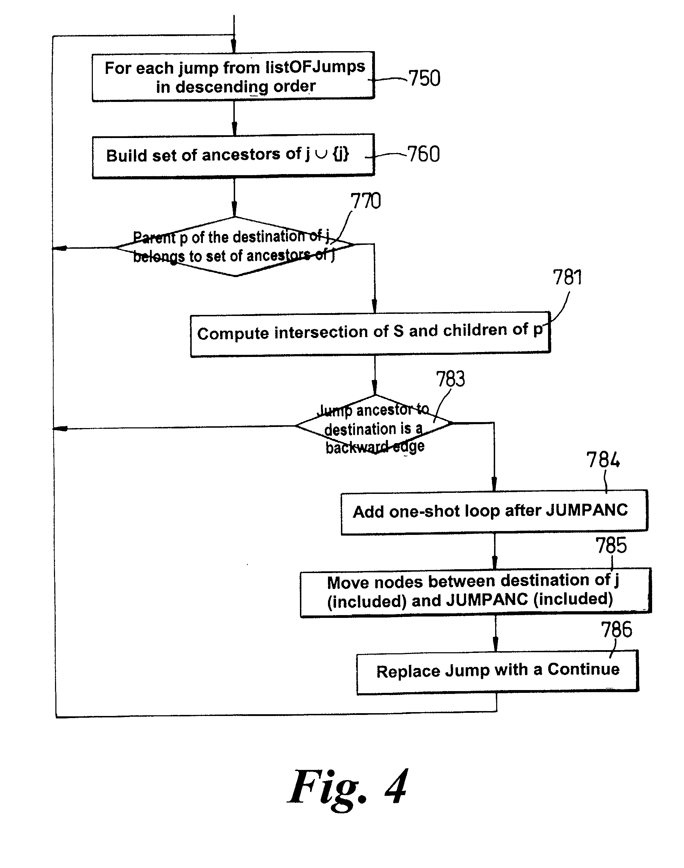

Figure 4 is a flow diagram illustrating a backward edge augmentation process;
Figures 5 and 6 illustrates the introduction of one additional ONE-SHOT node within the tree augmentation process;
Figure 7 shows the process used for eliminating unnecessary loops;
Figures 8 and 9 illustrate the effect of removal of the useless edges in the tree augmentation process;
Figure 10 illustrates the effect of the tree augmentation process on the syntax tree of Fig 1.

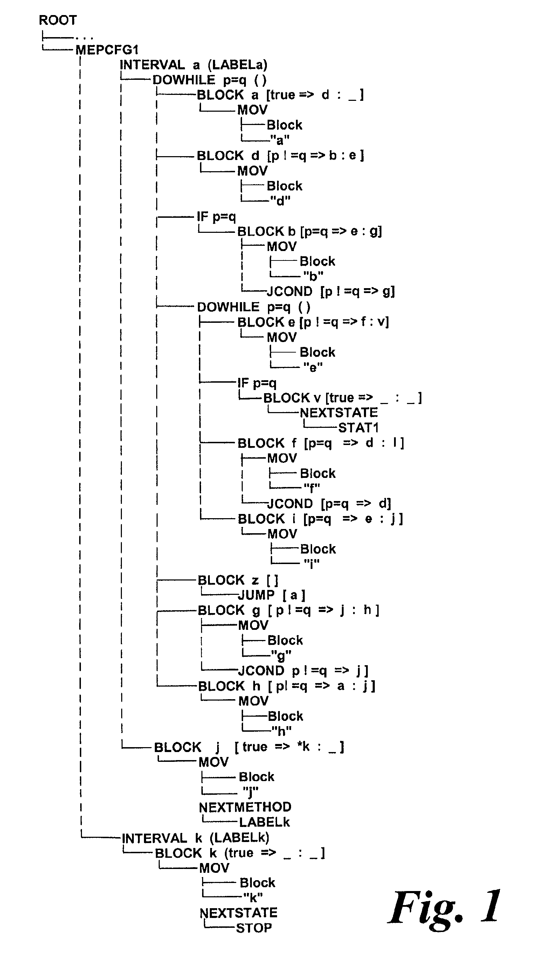

Fig 1 shows a syntax tree representing program code. The concept of a syntax tree and its generation is well known in itself and, in consequence, will not be described in detail herein.

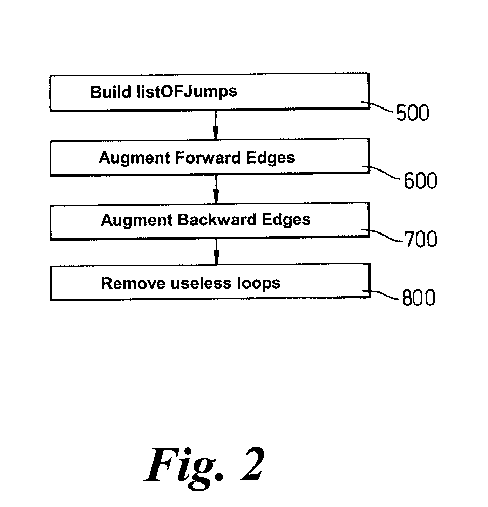

The code contains both Jump statements and conditional jump (JCOND) statements. The process of tree augmentation to be described below is intended to change the representation of the syntax tree stored within the memory for the purpose of eliminating the need for such JUMP and JCOND statements. The tree augmentation results from the execution of steps 500, 600, 700 and 800 which are represented in Fig 2.

In a step 500, the process computes a chained list of the branches of the originating code. For this purpose, the nodes of the syntax tree are successively processed and all the nodes which correspond to basic blocks and which contain a branching instruction are saved within the chained list.

In a step 600, a first augmentation of the syntax tree is performed which corresponds to the introduction of additional loops associated with forward edges. During the first traversal, when a jump statement is encountered that corresponds to a forward edge, the tree hierarchy is is ascended until the level of the referenced basic block is reached. Then a one shot loop is added just before the referenced basic block and labelled with the same label as the referenced basic block. All the nodes between the referenced basic block (excluded) and the new structure node are moved under the new structure node and the jump statement is replaced with a break statement.

In a step 700, a second augmentation of the syntax tree is performed which corresponds to the introduction of additional loops associated with backward edges. During the second traversal, when a jump statement is encountered that corresponds to a backward edge, the tree hierarchy is ascended until the level of the referenced basic block is reached. Then a one shot loop is added just next to the referenced basic block and labelled with the same label as the referenced basic block. All the nodes between the referenced basic block (included) and the new structure node are moved under the new structure node and the jump statement is replaced with a continue statement. In a step 800, the process scans the different loops which were introduced for the purpose of eliminating those which are not necessary.

This process will be described in more detail below.

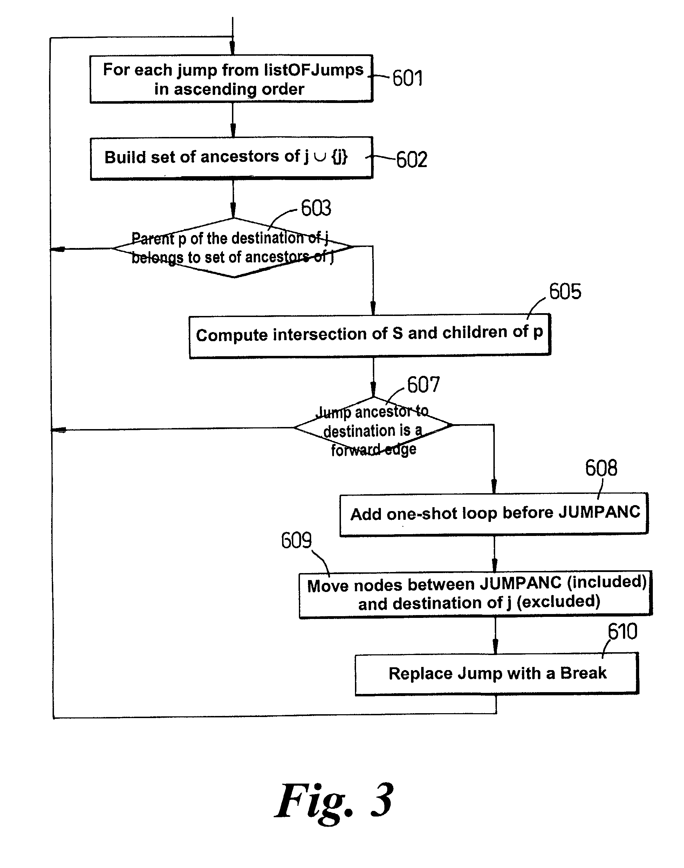

With reference to Fig. 3 there will now be described the tree augmentation process of step 600 which introduces additional loops corresponding to forward edges. For this purpose, a "For each node j" step 601 is used which scans in a ascending or upstream order the branching nodes which were saved in the chained list computed in the step 500 of figure 2.

The process then proceeds with a step 602 where a set S is computed, for the current node being considered in step 601, containing the ancestors corresponding to the current node j, and the current node j itself.

In a step 603, the process tests whether the parent p of the destination of the current node j belongs to the set S, in which case the process goes to a step 605. If not, the process loops back to step 601 to process a node corresponding to the next value of j.

In step 605, the process determines the intersection of the set S with the set containing all the children of p. It should be noticed that only one node will satisfy this condition. This particular node is associated with a variable which is entitled JUMP ANC.

The process then proceeds to a step 607 which is a test for determining whether the edge which comes from the destination node and goes to the JUMP ANC is a forward edge, in which case the process goes to a step 608. If not, the process loops back to step 601 to process a node corresponding to the next value of j.

In step 608, an additional node which corresponds to a loop structure of the type ONE-SHOT, that is to say a particular loop which is only executed once by the program, is introduced in the representation of the syntax tree at a location corresponding to the brother position of the JUMP ANC node, just before the JUMP ANC node.

The process then proceeds to a step 609 where the representation of the syntax tree is changed in such a way as the all the nodes located between the JUMP ANC node (included) and the destination node (excluded) are moved and newly relocated to depend from the newly created ONE-SHOT node.

The process then proceeds to a step 610 where the JUMP or JCOND instruction contained within the node of the syntax tree is replaced with a Break instruction which is used for the reference to the ONE-SHOT node which was created.

The process then loops back to step 601 again in order to process the next node j.

With respect to figure 26 there will now be described the tree augmentation process which is executed for the purpose of introducing additional loops corresponding to backward edges. For this purpose, a "For each node j" step 750 is employed which scans in a descending or a downstream order the branching nodes which were saved in the chained list computed in the step 500 of figure 2.

The process then proceeds with a step 760 where, for the current node being considered in step 601, a set S is computed containing the ancestors corresponding to the current node j, and the current node j itself.

In a step 780, it is tested whether the parent p of the destination of the current node j belongs to the set S, in which case the process goes to a step 781. Conversely, the process loops back to step 750 to process a node corresponding to the next value of j.

In step 781, the process determines the intersection of the set S with the set containing all the children of p. It should be noticed that only one node is likely to satisfy this condition. This particular node is associated with a variable which is entitled JUMP ANC.

The process then proceeds to a step 783 which consists of a test for determining whether the edge which comes from the destination node and goes to the JUMP ANC is a backward edge, in which case the process goes to a step 784. If not, the process loops back to step 750 for the purpose of processing a node corresponding to the next value of j.

In step 784, the process introduces in the representation of the syntax tree which is stored within the memory of the computer an additional node which corresponds to a loop structure of the type ONE-SHOT, that is to say a particular loop which is only executed once by the program. More particularly, it should be observed that the process introduces this ONE-SHOT node at a place corresponding to the brother position of the JUMP ANC node, after the JUMP ANC node.

The process then proceeds to a step 785 where the representation of the syntax tree is changed in such a way as the all the nodes located between the JUMP ANC node (included) and the destination node (included) are moved and newly relocated to depend from the newly created ONE-SHOT node.

The process then proceeds to a step 786 where it replaces the JUMP instruction contained within the node of the syntax tree with a CONTINUE instruction which is used for the reference to the ONE-SHOT node which was created.

The process then loops back to step 750 again for the purpose of processing the next node j.

For clarity's sake, an illustrative example of an algorithm for steps 600 and 700 is provided below.

### Example 1

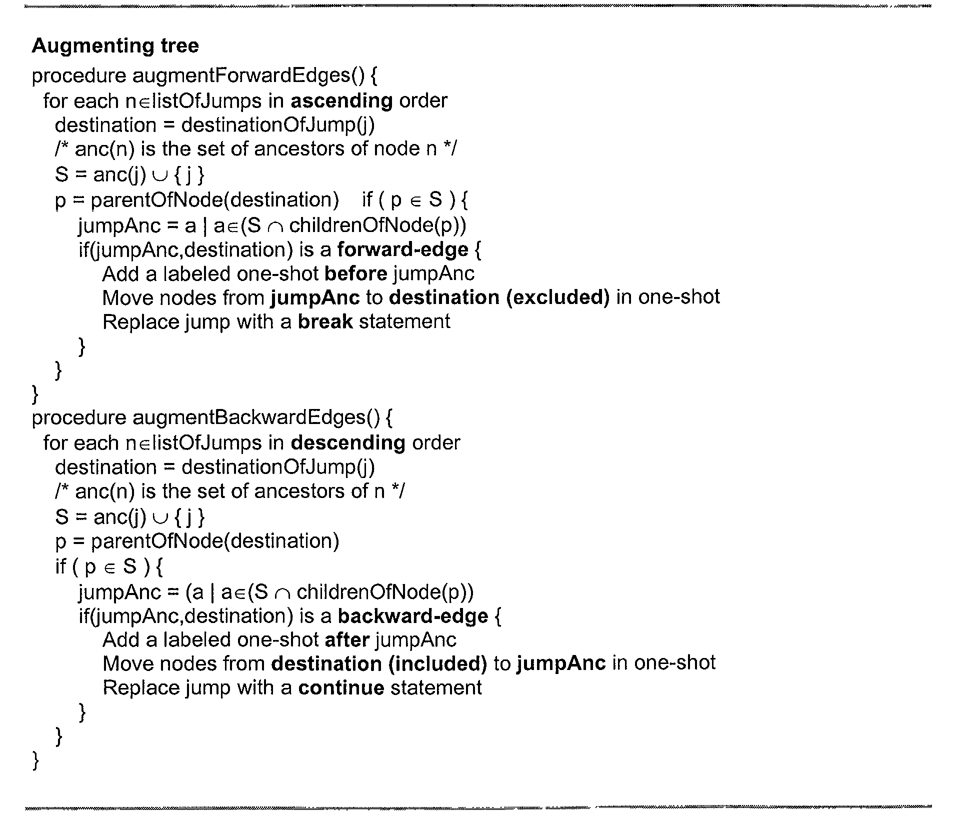

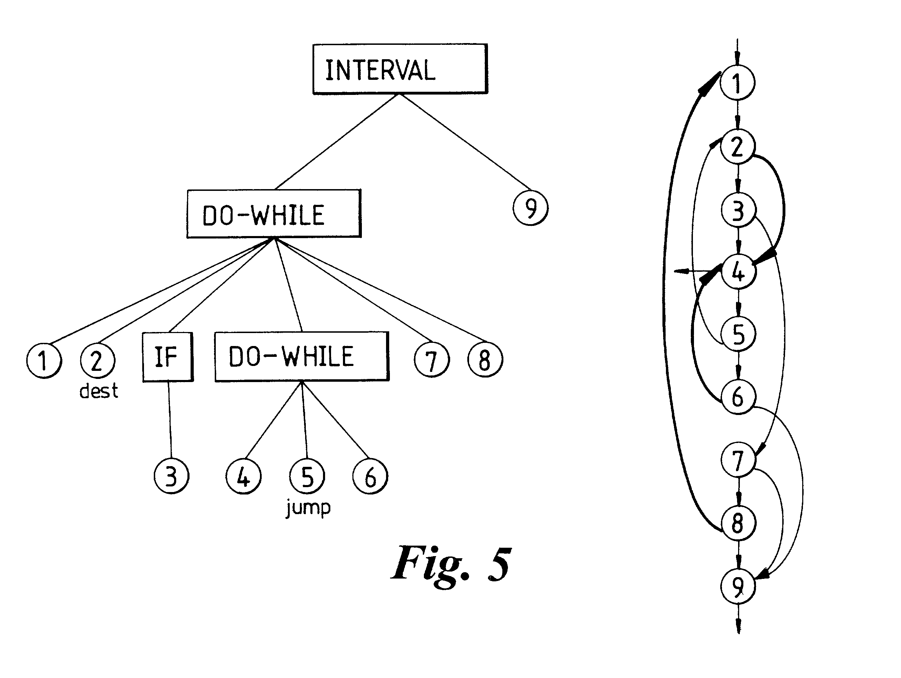

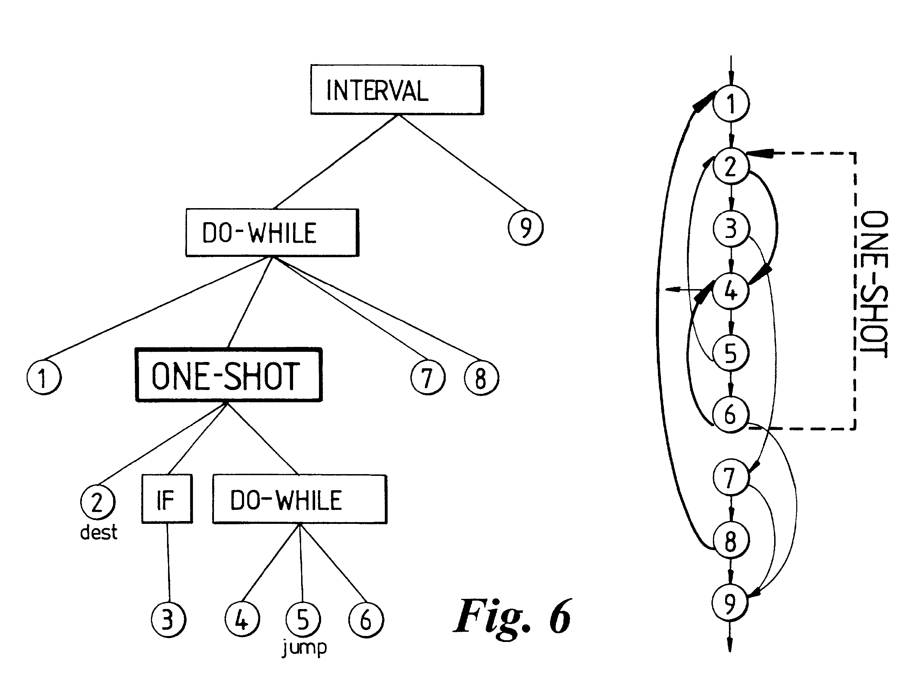

This direct introduction of additional nodes within the syntax tree is particularly illustrated in the figures 5 and 6 which show the application of the method to a sub-tree.

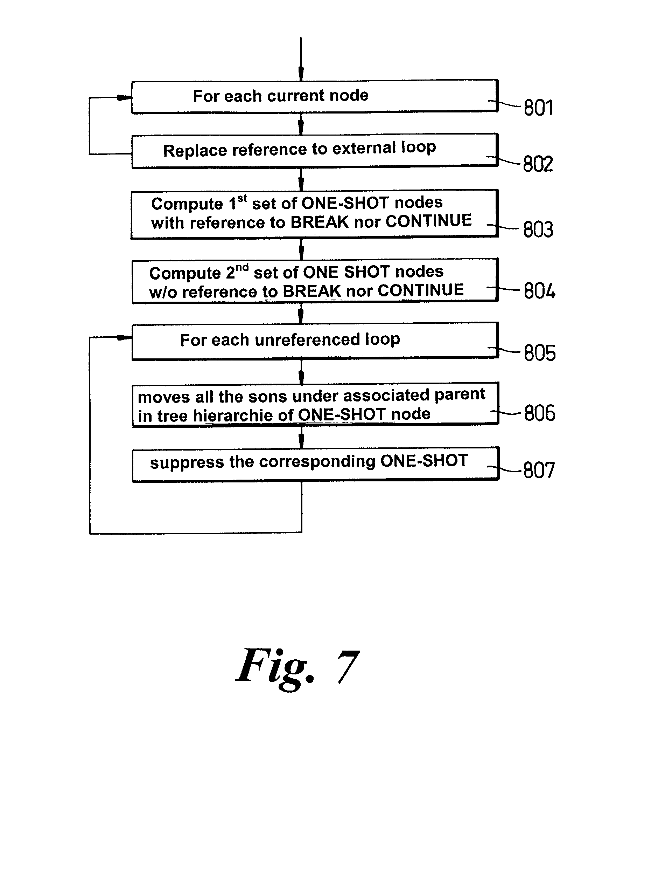

There will now be described with respect to figure 7 in detail the process of step 800 used for eliminating unnecessary loops which were possibly introduced by the steps 600 and 700.

The process starts with a step 801 of the type of "For each current node " which is used for initiating a loop which successively processes, in an ascending or upstream way, all the nodes which correspond to basic blocks, i.e. which contain CONTINUE or BREAK instructions. As explained above, those nodes were listed in the step 500 of the process.

For each node corresponding to a CONTINUE or BREAK instruction, the process replaces in a step 802 the reference associated with that CONTINUE or BREAK loop to a loop which is as remote and external as possible, while not modifying the semantic of the syntax tree.

The semantic of the syntax tree remains unchanged. In the case of a BREAK instruction, there should be no instructions between the end of the originally referenced loop and the newly referenced loop. In the case of a CONTINUE instruction, there should be no instructions between the beginning of the loop originally referenced and the newly referenced loop.

The process then proceeds back to step 801 again, for the purpose of processing all the nodes of the list of nodes which was computed in step 500.

When all the nodes are processed, the process proceeds with a step 803 which computes a first set of nodes corresponding to structures of the type ONE-SHOT, and which are assigned at least one reference of the type BREAK or CONTINUE.

The process then proceeds to a step 804 where a second set of nodes is computed which contains nodes corresponding to loop structures of the type ONE-SHOT and which are assigned no reference to a CONTINUE nor a BREAK instruction. This is achieved by removing from all the nodes corresponding to a ONE-SHOT type the nodes of the first set of ONE-SHOT nodes computed in step 803.

In a step 805, the process then uses a loop of the type "For each unreferenced loop" for successively scanning the nodes of this second set of nodes and, for every node of this loop corresponding to a ONE-SHOT loop structure not referenced, the process moves in a step 806 all the child nodes of the associated parent in the tree hierarchy of the ONE-SHOT node so that these child nodes are located between the predecessor and the successor of this node. In a subsequent step 807, the process removes the corresponding ONE-SHOT node in order to simplify the syntax tree.

The process then loops back to step 805 in order to process the remaining nodes of the set of nodes constructed in step 804.

If a referenced node that does not contain the jump statement that references the node is moved in a structure, then this could potentially create a structure with multiple entry points.

However, since forward edges are augmented from beginning to end and back edges from end to beginning, the jump statement always belongs to the structure that contains the referenced block. Since the referenced block cannot belong to the sequence of basic blocks that are moved in a structure, there is no possibility of a tail to tail structure being created.

There is a potential problem with disjoint structures, which could cause a problem; A back-edge and a forward edge can have the same destination node. For a back edge, the referenced basic block is moved into the one shot loop structure. If we first augment the tree for back edges, then the one shot loop structure still has a single entry point, but the forward jump statement can not be removed because its destination is contained within a disjoint structure. That is why the tree is augmented for all the forward edges, and then for all the backward edges.

It will be understood that the techniques described may be compiled into computer programs. These computer programs can exist in a variety of forms both active and inactive. For example, the computer program can exist as software comprised of program instructions or statements in source code, object code, executable code or other formats. Any of the above can be embodied on a computer readable medium, which include storage devices and signals, in compressed or uncompressed form. Exemplary computer readable storage devices include conventional computer system RAM (random access memory), ROM (read only memory), EPROM (erasable, programmable ROM), EEPROM (electrically erasable, programmable ROM), and magnetic or optical disks or tapes. Exemplary computer readable signals, whether modulated using a carrier or not, are signals that a computer system hosting or running the computer program can be configured to access, including signals downloaded through the Internet or other networks. Concrete examples of the foregoing include distribution of executable software program(s) of the computer program on a CD-ROM or via Internet download. In a sense, the Internet itself, as an abstract entity, is a computer readable medium. The same is true of computer networks in general.

While this invention has been described in conjunction with the specific embodiments thereof, it is evident that many alternatives, modifications and variations will be apparent to those skilled in the art. Also, it will be apparent to one of ordinary skill that the configuration application may be used with services, which may not necessarily communicate over the Internet, but communicate with other entities through private networks and/or the Internet. These changes and others may be made without departing from the spirit and scope of the invention.

## Claims

1. Process for structuring program code, comprising the steps of:
procuring a syntax tree representative of an input program code;
replacing at least some jump statements in the input program code by one-shot loops by introducing loop structure nodes directly in the syntax tree to depend from a common ancestor of the jump statement and the target thereof, the basic blocks in the same branches of the syntax tree as the jump statement and its target and the branches inbetween being moved to depend from the introduced loop structure node, the jump statement being replaced by a break or continue statement so that the syntax tree corresponds to an output program code having functionality substantially equivalent to that of the input program code.

2. Process as claimed in claim 1 comprising scanning the syntax tree in a forward direction to replace forward jumps and then scanning the syntax tree in a backward direction to replace backward jumps.

3. Process as claimed in claim 1 or claim 2 comprising removing redundant one-shot loops from the syntax tree.

4. A computer program product comprising program code means for carrying out a process as claimed in any preceding claim.
